# EUROPÄISCHE PATENTANMELDUNG

(11) **EP 0 668 186 A1**
(43) Veröffentlichungstag der Anmeldung: **23.08.1995**
(21) Anmeldenummer: 95101410.9
(22) Anmeldetag: 02.02.1995
(51) Int. Cl.: B60P 3/20, B60P 7/14, F25D 23/06

(54) **Vorrichtung zum Abteilen des Volumens von Kühl- bzw. Gefrierräumen**

(30) Priorität: 18.02.1994 DE 4405164
(71) Anmelder: Eberhardt, Roland, D-86637 Geratshofen (DE)
(72) Erfinder: Eberhardt, Roland, D-86637 Geratshofen (DE)
(74) Vertreter: Munk, Ludwig, Dipl.-Ing.

(57) **Zusammenfassung**

Bei Kühl- beziehungsweise Gefrierräumen wie Kofferaufbauten (1) von Tiefkühlfahrzeugen, lassen sich dadurch eine hohe Wirtschaftlichkeit und Qualitätssicherung erzielen, daß der gekühlte Raum durch eine mobile Stellwand (7) in zwei Abteile (8a, 9b) unterteilt ist. Die mobile Stellwand besteht zur Erzielung eines geringen Raumbedarfs und -gewichts aus einem in sich beweglichen Behang (10) der durch eine gegenüber der Innenseite des gekühlten Raums verspannbare Stützeinrichtung (6) aufspannbar ist, wobei der Behang (10) randseitige Taschen (11) aufweist, in die die Stützeinrichtung eingreift.

## Beschreibung

Die Erfindung betrifft eine Vorrichtung zum Abteilen des Volumens von Kühl- beziehungsweise Gefrierräumen, gemäß dem Oberbegriff des Anspruchs 1.

Mit Hilfe der genannten Abteilung ist es möglich, bei teilbeladenen Fahrzeugen etc.. ein beladenes Abteil und ein Leerabteil zu schaffen, um die von einem Kühlaggregat erzeugte Kälte im wesentlichen auf das beladene Abteil zu konzentrieren und dementsprechend die Betriebskosten zu senken und gleichzeitig sicherzustellen, daß die tiefgekühlte Ware die Grenztemperatur möglichst nicht überschreitet.

Eine gattungsgemäße Vorrichtung ist aus der US 5 028 087 bekannt.

Hiervon ausgehend ist es daher die Aufgabe der vorliegenden Erfindung, eine Vorrichtung eingangs erwähnter Art zu schaffen, die nicht nur einfach aufgebaut und ohne weiteres nachrüstbar ist, sondern auch keinen nennenswerten Verlust an Fassungsvermögen und Nutzlast verursacht und deren Position dem Füllzustand exakt anpaßbar ist.

Diese Aufgabe wird an einer Vorrichtung gemäß dem Oberbegriff des Anspruchs 1 erfindungsgemäß durch die im Kennzeichenteil des gleichen Anspruchs genannten Merkmale gelöst.

Mit diesen Maßnahmen werden die Nachteile der bekannten Anordnungen vollständig vermieden. Es ergibt sich daher eine ausgezeichnete Wirtschaftlichkeit. Durch die randseitig vorgesehenen Taschen, in die die Stützeinrichtung eingreifen kann, ergibt sich trotz Verwendung eines in sich beweglichen Behangs eine hohe Stellwandstabilität, so daß die Stellwand leicht verrutschbar ist. Diese Mobilität der erfindungsgemäßen Stellwand stellt sicher, daß diese in jedem Falle hinter der letzten Ladungspalette angeordnet werden kann, was eine exakte Aufteilung in ein beladenes Abteil und ein Leerabteil ermöglicht. Ein weiterer Vorteil der erfindungsgemäßen Maßnahmen ist darin zu sehen, daß der die erfindungsgemäße Stellwand bildende, in sich bewegliche Behang sich ohne weiteres eventuell vorhandenen, deckenseitigen Einbauten, wie Luftleitungen etc.. anpassen kann. Derartige Einbauten sind daher kein Hindernis für eine Aufteilung des zur Verfügung stehenden Raums in zwei Abteile. Zudem verursacht die erfindungsgemäße Stellwand infolge ihres leichten Aufbaus praktisch keinen Verlust an Nutzlast. Dasselbe gilt für den Platzbedarf in jeder Richtung. Ein weiterer Vorteil ist darin zu sehen, daß die erfindungsgemäße Stellwand auch für Tiefkühlzüge mit Zugfahrzeug und Anhänger, die nacheinander entladen werden, nur einmal benötigt wird. Dieser Vorteil wird dadurch noch verstärkt, daß die erfindungsgemäße Stellwand leicht und schnell auf- und abbaubar ist und daß sich infolge des vergleichsweise einfachen Aufbaus zudem nur geringe Gestehungskosten ergeben. Infolge der Mobilität der Stellwand bietet diese ferner die Möglichkeit, durch Schrägstellen der Stellwand während eines Entladevorgangs etc.. einen Teilquerschnitt des Laderaums abzudecken. Hierdurch lassen sich Kälteverluste reduzieren und damit eine unzulässige Erwärmung des gekühlten Guts vermeiden. Die erfindungsgemäßen Maßnahmen ergeben dementsprechend ein wirksames Mittel, um die vorhandenen Kühlagregate zu entlasten und damit deren Lebensdauer zu erhöhen und die notwendigen Wartungsintervalle zu verlängern sowie die Energiekosten zu senken.

Vorteilhafte Ausgestaltungen und zweckmäßige Fortbildungen der übergeordneten Maßnahmen sind in den Unteransprüchen angegeben. So kann der Behang vorzugsweise aus Planenmaterial bestehen. Hierdurch wird mit einfachen Mitteln eine Dichtheit erreicht und damit sichergestellt, daß die von den Kühlaggregaten umgewälzte Kühlluft zuverlässig im zu kühlenden Abteil gehalten wird.

Eine weitere zweckmäßige Maßnahme kann darin bestehen, daß der Behang einen umlaufenden, nach innen abgewinkelten Randflansch aufweist. Diese Maßnahmen ergeben eine umlaufende Randtasche, in die die zugeordnete Stützeinrichtung zum Aufspannen des Behangs eingreifen kann.

Die Stützeinrichtung kann zweckmäßig zumindest im Bereich der seitlichen Flanken angeordnete Spannstäbe umfassen, die vorzugsweise als Teleskopstäbe ausgebildet sein können. Dies erleichtert die Fixierung und Lösung der Stützeinrichtung, was sich vorteilhaft auf die Mobilität auswirkt.

Zweckmäßig können als Spannstäbe die bei Tiefkühlfahrzeugen ohnehin vorhandenen Haltestempel zur Sicherung der Paletten der Ladung Verwendung finden. Hierdurch reduziert sich der Aufwand für die erfindungsgemäße Stellwand auf die den Behang bildende Haut.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung entnehmbar.

Nachstehend wird ein bevorzugtes Ausführungsbeispiel der Erfindung anhand der Zeichnung näher erläutert. Hierbei zeigen:
Figur 1 eine Ansicht eines Tiefkühlfahrzeugs teilweise im Schnitt,
Figur 2 einen Grundriß des Innenraums der Anordnung gemäß Figur 1,
Figur 3 eine perspektivische Teilansicht der erfindungsgemäßen Stellwand in schematischer Darstellung und
Figur 4 einen Zuschnitt zur Herstellung der erfindungsgemäßen Stellwand als Falzformling.

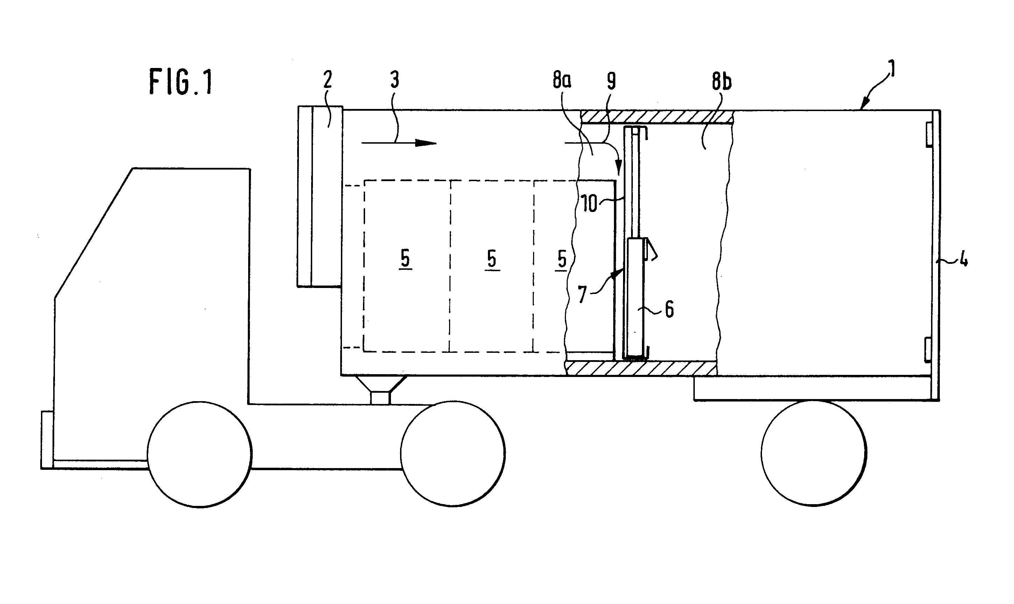

Das der Figur 1 zugrunde liegende Tiefkühlfahrzeug besitzt einen mit isolierten Wänden versehenen Kofferaufbau 1, dessen Innenraum durch ein im Bereich der vorderen Stirnseite angeordnetes Kühlaggregat 2 gekühlt wird. Die vom Kühlaggregat 2 in den Innenraum des Kofferaufbaus 1 eingeblasene Kühlluft ist durch den von vorne nach hinten gerichteten Pfeil 3 angedeutet. Im Bereich der hinteren Stirnseite des Kofferaufbaus 1 ist eine durch Türflügel 4 verschließbare Öffnung vorgesehen, über die der Innenraum des Kofferaufbaus 1 bebeziehungsweise entladbar ist.

Die Ladung besteht in der Regel aus palettierter Tiefkühlware, wie bei 5 angedeutet ist. Im dargestellten Beispiels ist der Innenraum des Kofferaufbaus 1 bereits teilweise entladen. Die noch vorhandenen Paletten sind durch hinter der letzten Palettenreihe angeordnete, teleskopierbare Stempel 6 gegen Verrutschen gesichert. Diese Stempel werden einfach zwischen Boden und Decke des Kofferaufbaus 1 eingespannt.

Die Entladung eines Fahrzeugs hier vorliegender Art erfolgt in der Regel Zug-um-Zug. Der nicht mehr beladene Teil des Innenraums des Kofferaufbaus 1 wird dementsprechend von Entladevorgang zu Entladevorgang größer. Um die in den Innenraum eingeblasene Kühlluft nur im beladenen Bereich zu halten, das heißt den Zirkulationsweg der über das Kühlaggregat 2 geführten Luft zu verkürzen und dementsprechend Verluste so gut wie möglich zu vermeiden, ist eine als ganzes mit 7 bezeichnete Stellwand vorgesehen, die den Innenraum des Kofferaufbaus 1 in zwei Abteile 8a, 8b unterteilt, wobei das Abteil 8a die noch vorhandene Ladung enthält und das Abteil 8b leer ist. Die Trennwand 7 ist als mobile Trennwand ausgebildet, die in jedem Falle direkt hinter der letzten Palettenreihe angeordnet werden kann. Die Fläche der Trennwand 7 entspricht dem lichten Querschnitt des Innenraums des Kofferaufbaus 1. In der Regel liegt ein rechteckiger Querschnitt vor, sodaß sich eine rechteckige Trennwand ergibt. Durch die Trennwand 7 wird die in das beladene Abteil 8a eingeblasene Kühlluft umgelenkt, wie durch den Umlenkungspfeil 9 angedeutet ist. Diese Umlenkung würde bei fehlender Trennwand im Bereich der hinteren Stirnseite des Kofferaufbaus 1 stattfinden. Durch die Trennwand 7 wird daher der Zirkulationsweg der Kühlluft verkürzt.

Die Trennwand 7 enthält einen aus einem in sich beweglichen Material bestehenden Behang 10, der durch eine Stützeinrichtung aufgespannt wird, die lösbar an der Innenseite der Wandung des Kofferaufbaus 1 festlegbar ist. Um einen Durchtritt der Luft durch die Trennwand 7 weitestgehend zu vermeiden, besteht der Behang aus möglichst luftundurchlässigem Material, wie Folienmaterial oder Planenmaterial. Die Verwendung von aus einem mit Kunststoff kaschierten Gewebe bestehenden Planenmaterial, wie es auch zur Bildung von LKW-Abdeckungen Verwendung findet, hat bei Versuchen gute Ergebnisse erbracht.

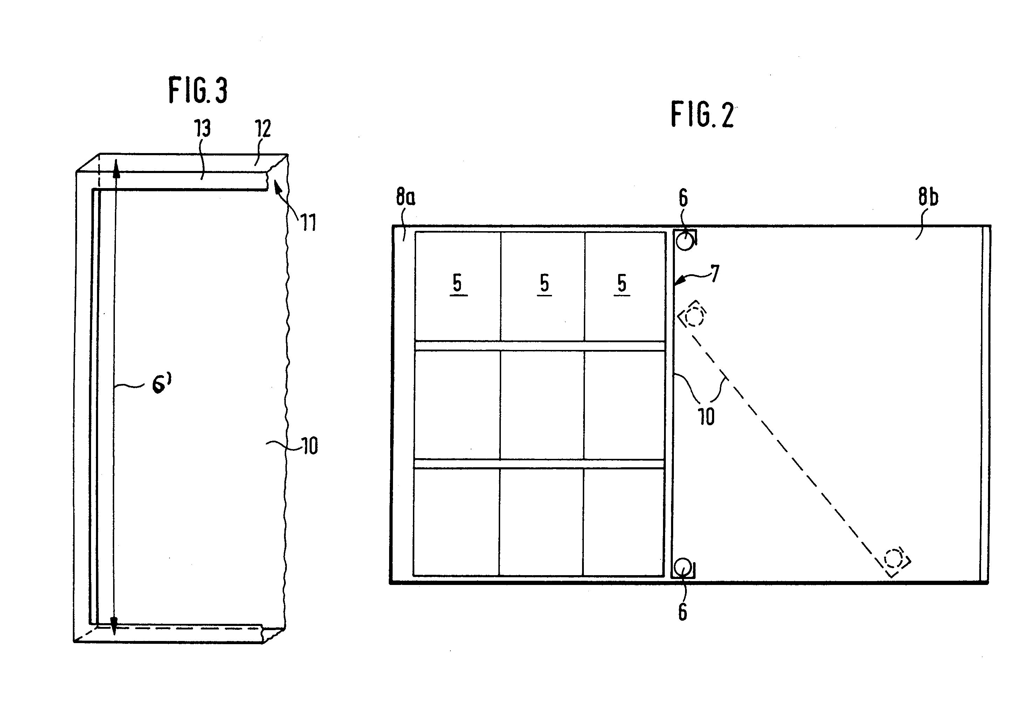

Zur Bildung der genannten Stützeinrichtung zum Aufspannen des Behangs 10 können einfach die zur Sicherung der Paletten ohnehin vorhandenen Haltestempel 6 Verwendung finden, die durch entsprechende Verlängerung beziehungsweise Verkürzung zwischen Boden und Decke des Innenraums des Kofferaufbaus 1 verspannbar beziehungsweise lösbar sind. Es wäre selbstverständlich aber auch denkbar, der Trennwand 7 eigene Stützstäbe zuzuordnen, die zweckmäßig als Teleskopstäbe ausgebildet sind und dementsprechend durch Verlängerung beziehungsweise Verkürzung verspannbar beziehungsweise lösbar sind. Diese Stützstäbe sind in jedem Falle, wie aus Figur 2 erkennbar ist, im Bereich der seitlichen Flanken der Trennwand 7 angeordnet. In manchen Fällen kann es zweckmäßig sein, auch noch einen oder mehrere mittlere Stützstäbe vorzusehen.

Während des in der Regel während der Fahrt stattfindenden Betriebs des Kühlaggregat 2 ist die Stellwand 7 so positioniert, daß sie den Querschnitt des Innenraums des Kofferaufbaus 1 vollständig überbrückt und dementsprechend den genannten Innenraum in die Abteile 8a, 8b unterteilt, wie in Figur 2 mit durchgezogenen Linien angedeutet ist. Zum Entladen des Abteils 8a kann die Trennwand 7 ganz entfernt werden. Es ist aber auch ohne weiteres möglich, die Trennwand 7 hierzu einfach schrägzustellen, wie in Figur 2 mit unterbrochenen Linien angedeutet ist, wobei der lichte Querschnitt lediglich teilweise freigegeben wird. Hierdurch läßt sich der Querschnitt, über den ein Luftaustausch stattfinden kann, gegenüber dem ganzen Querschnitt des Innenraums des Kofferaufbaus 1 reduzieren, womit auch der stattfindende Luftaustausch und damit die Erwärmung der Ladung des Abteils 8a reduziert werden. Die erwähnte Schrägstellung der Trennwand 7 ist aufgrund ihrer Mobilität ohne weiteres möglich. Bei der dargestellten Anordnung sind hierzu lediglich beide Stützstäbe zu versetzen, was eine die ausströmende Kälte fangende Taschenkonfiguration ergibt. Selbstverständlich wäre es auch denkbar, lediglich einen Stützstab zu lösen und an der gewünschten Versatzstellung wieder anzubringen.

Der Behang 10 ist, wie am besten aus Figur 3 erkennbar ist, randseitig mit einer umlaufenden Randtasche 11 versehen. Diese fungiert als Mittel zur Aufnahme der den Behang 10 aufspannenden Stützeinrichtung, wie in Figur 3 durch einen Pfeil 6' angedeutet ist. Die Randtasche 11 ermöglicht praktisch einen formflüssigen Eingriff der hier als Stützeinrichtung fungierenden Haltestempfel 6. Zur Bildung der Randtasche 11 ist der Behang 10 randseitig mit einem umlaufenden Randflansch 12 versehen, der an seiner freien Seite eine nach innen gerichtete Abwinklung 13 aufweist. Der umlaufende Randflansch 12 bildet einen etwa im rechten Winkel zum Behang 10 angeordneten, umlaufenden Rand. Die Abwinklung 13 bildet einen behangparallelen Deckrahmen. Die Tasche 11 besitzt dementsprechend einen etwa u-förmigen Querschnitt.

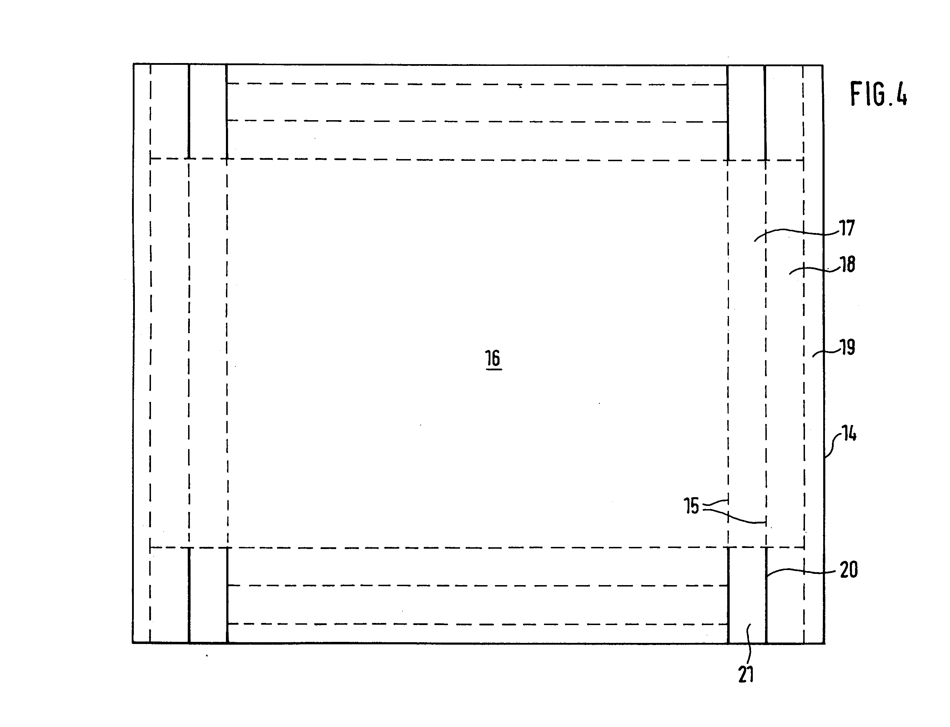

Ein Behang vorliegender Art kann als Falzformling hergestellt werden. Hierzu findet ein der Figur 4 zugrunde liegender Zuschnitt 14 Verwendung. Hierbei sind die Falzlinien durch unterbrochene Linien 15 angedeutet. Das mittlere Feld 16 besitzt die gewünschte Größe der Trennwand 7, deren Konfirguration der Querschnittskonfirguration des abzuteilenden Raums entspricht. Dieses Feld ist von einem den Randflansch 12 bildenden Streifen 17 umgeben. An diesen schließt sich ein die Abwinklung 13 bildender Streifen 18 an. Zu Bildung des Randflansches 12 wird der Streifen 17 entlang der inneren Falzlinie 15 rechtwinklig zur Fläche des Felds 16 gefalzt. Zur Bildung der Abwinklung 13 wird der Streifen 18 entlang der zweiten Falzlinie rechtwinklig zum Streifen 17 gefalzt. Im dargestellten Beispiel ist noch ein dritter Streifen 19 vorgesehen, der zur Bildung eines randseitigen Saums einfach um die dritte Falzlinie 15 umgeschlagen und verklebt werden kann. Um die genannte Falzung faltenfrei durchführen zu können, sind im Bereich der Ecken jeweils parallel zu einer Flanke geführte Einschnitte 20 vorgesehen, die jeweils auf den beiden inneren Falzlinien verlaufen und vom äußersten Rand bis zur inneren, quer hierzu verlaufenden Falzlinie reichen. Diese Einschnitte 20 ergeben Zungen 21, die zur Verstärkung der Ecken umqeschlaqen werden können.

## Patentansprüche

1. Vorrichtung zum Abteilen des Volumens von Kühlbeziehungsweise Gefrierräumen, insbesondere des Volumens von Kofferaufbauten (1) von Tiefkühlfahrzeugen, wobei eine in ihrer Fläche dem Raumquerschnitt angepaßte, mobile Stellwand (7), die aus einem in sich beweglichen luftundurchläßigen Behang (10) besteht, durch eine zugeordnete, gegenüber der Innenwand des Kühl- beziehungsweise Gefrierraums verspannbare Stützeinrichtung aufspannbar ist, dadurch gekennzeichnet, daß der Behang (10) randseitig taschenförmig ausgebildet ist und daß in die Taschen (11) die Stützeinrichtung eingreift.

2. Vorrichtung nach Anspruch 1, dadurch gekennzeichnet, daß der Behang (10) aus Planenmaterial besteht.

3. Vorrichtung nach Anspruch 2, dadurch gekennzeichnet, daß der Behang (10) eine umlaufende Randtasche (11) aufweist.

4. Vorrichtung nach Anspruch 3 oder 4, dadurch gekennzeichnet, daß der Behang (10) einen umlaufenden Randflansch (12) aufweist, von dem eine Abwinklung (13) nach innen absteht.

5. Vorrichtung nach einem der vorhergehenden Ansprüche, dadurch gekennzeichnet, daß der Behang (10) als Falzformling ausgebildet ist, der aus einem Zuschnitt (14) hergestellt ist, der gegenüber dem Raumquerschnitt allseitig zumindest um die Breite des Randflansches (12) und der Abwinklung (13) vergrößert ist und im Bereich der Ecken zu jeweils einer Flanke parallele, den jeweils zugeordneten Randflanschabschnitt flankierende Einschnitte (20) aufweist.

6. Vorrichtung nach einem der vorhergehenden Ansprüche, dadurch gekennzeichnet, daß die Stützeinrichtung zumindest im Bereich der seitlichen Flanken des Behangs (10) angeordnete Spannstäbe enthält.

7. Vorrichtung nach Anspruch 6, dadurch gekennzeichnet, daß die Spannstäbe als Teleskopstäbe ausgebildet sind.

8. Vorrichtung nach Anspruch 6 oder 7, dadurch gekennzeichnet, daß als Spannstäbe teleskopierbare Haltestempel (6) Verwendung finden, die gleichzeitig zur Sicherung der Ladung verwendbar sind.
